# EUROPEAN PATENT SPECIFICATION

(11) **EP 2 022 685 B1**
(45) Date of publication and mention of the grant of the patent: **01.02.2012**
(21) Application number: 08013705.2
(22) Date of filing: 30.07.2008
(51) Int. Cl.: B60R 21/207

(54) **Airbag apparatus**
Airbag-Vorrichtung
Dispositif d'airbag

(30) Priority: 31.07.2007 JP 2007199562
(43) Date of publication of application: 11.02.2009
(73) Proprietor: TOYODA GOSEI CO., LTD., Aichi-ken 452-8564 (JP)
(72) Inventor: Kawabe, Hitoshi, Nishikasugai-gun Aichi-ken, 452-8564 (JP); Nukaya, Akihiro, Nishikasugai-gun Aichi-ken, 452-8564 (JP)
(74) Representative: Kramer - Barske - Schmidtchen

(56) References cited:
- EP-A2- 1 775 178
- WO-A1-2007/049541
- JP-A- 2007 126 117

## Description

The present invention relates to an airbag apparatus that inflates an airbag installed in a seat portion of a vehicle seat with inflation fluid such as inflation gas, thereby raising the seat face, thereby restraining an object to be restrained, such as an occupant seated on the seat portion, from moving forward.

When an impact due to a front collision is applied to a vehicle from front, the lumbar region of an occupant restrained to a vehicle seat by a seat belt device may be disengaged from the lap belt portion and move forward. This is known as a "submarine phenomenon." A number of countermeasures against the submarine phenomenon have been implemented or proposed.

For example, Japanese Laid-Open Patent Publication No. 2007-126117 discloses a vehicle seat having an airbag installed in a seat portion and an inflator. The inflator generates inflation gas, which inflates the airbag so that the seating face is raised. The airbag is disposed inside the seat portion in a state of being deployed without being filled with inflation gas. The airbag is fixed to a vehicle structure at first fixation spots located in a front portion of the airbag and second fixation spots located in a rear portion. The vehicle seat raises the seating face so as to push a portion on the back of the knees in the femoral region of an occupant, thereby ensuring the restraint by the lap belt portion. The vehicle seat thus restricts forward movement of the lumbar region.

However, in the vehicle seat disclosed in Japanese Laid-Open Patent Publication No. 2007-126117, the distance from the first fixation spots to the second fixation spots via the upper surface is substantially equal to the distance from the first fixation spots to the second fixation spots via the lower surface. Therefore, the airbag inflates downward also, which reduces the amount of the upward inflation. This reduces the raised amount of the seating face, which can diminish the intended suppression of forward sliding of the lumbar region.

In contrast, the fourth embodiment of Japanese Laid-Open Patent Publication No. 2003-306122 discloses an airbag apparatus that receives the pressure of gas diffusing in an airbag, thereby producing reaction force directed in a desired direction. When a side collision is predicted, the airbag apparatus activates a motor to thrust a pressure receiving plate from a non-operation position in a door to an operation position outside of the door. Thereafter, the airbag apparatus deploys and inflates an airbag between an occupant and the pressure receiving plate. In this configuration, the pressure of the inflation gas in the airbag is received by the pressure receiving plate so that reaction force toward the occupant is produced. If the airbag apparatus is applied to the vehicle seat disclosed in Japanese Laid-Open Patent Publication No. 2007-126117, it is possible to produce an upward reaction force to eliminate the drawbacks of the vehicle seat.

As described above, if the technical content of Japanese Laid-Open Patent Publication No. 2003-306122 is combined with the vehicle seat disclosed in Japanese Laid-Open Patent Publication No. 2007-126117, the downward inflation of the airbag is suppressed, so that the airbag is inflated upward by an increased amount. In this case, however, the vehicle seat additionally needs to have a support mechanism for supporting the pressure receiving plate and a device that drives the support mechanism to thrust the pressure receiving plate. This complicates the structure of the vehicle seat, and the vehicle seat needs to have a space for accommodating the support mechanism. Accordingly, the costs of the vehicle seat are increased.

Airbag apparatuses installed in seat portions for restraining objects to be restrained, in particular the lumbar region of an occupant, are further known from EP 1 775 178 A2 and WO 2007/049541 A1.

EP 1 775 178 A2 discloses an airbag apparatus according to the preamble of claim 1.

Accordingly, it is an objective of the present invention to achieve efficient restraint with an airbag without complicating the structure of a vehicle seat, or needing a space for an additional function in the vehicle seat.

To achieve the foregoing objective, the present invention provides an airbag apparatus having an airbag adapted to be disposed in a seat portion of a vehicle seat. The airbag apparatus is adapted for raising a seating face of the seat portion by inflating the airbag with inflation fluid from an inflation fluid generator, thereby restraining an object-to-be-restrained on the seat portion from moving forward. The airbag includes inflation manner limiting means that allows upward inflation of the airbag while limiting downward inflation.

In this configuration, when the inflation fluid generated by the inflation fluid generator is supplied to the airbag, the airbag is inflated by the inflation fluid. At the inflation, the inflation manner limiting means limits downward inflation of the airbag, while allowing upward inflation. Such limitation prevents the inflation fluid from being used for unnecessary downward inflation of the airbag. Accordingly, a greater amount of the inflation fluid is effectively used for the upward inflation of the airbag. As a result, the airbag is efficiently inflated upward. The inflation raises the seating face of the seat portion as desired, so as to reliably preventing the object-to-be-restrained on the seat portion from moving forward.

The inflation manner limiting means is provided at the airbag. This eliminates the necessity of a support mechanism for supporting the pressure receiving plate or a device that actuates the support mechanism to thrust the pressure receiving plate. Accordingly, the structure of the vehicle seat is not complicated, and no space for a support mechanism is required in the vehicle seat. Thus, an object-to-be-restrained is efficiently restrained by the airbag.

According to the invention, the inflation manner limiting means include fixation spots that are fixed to fixing spots provided in a structure of the vehicle at least when the airbag is inflated, that the airbag include, as the fixation spot, a first fixation spot, which is fixed to a first fixing spot of the vehicle structure, and a pair of second fixation spots, which are fixed to second fixing spots spaced rearward of the vehicle from the first fixing spot and spaced from each other along a direction of a vehicle width, and that the distance from the first fixation spot to the second fixation spot via the upper surface of the airbag be longer than the distance from the first fixation spot to the second fixation spot via the lower surface of the airbag, wherein the airbag is consecutively inflated from a front section thereof toward a rear section thereof.

In this configuration, at least when the airbag is inflated, the airbag is fixed to the fixing spot of the vehicle structure at the first fixation spot. In addition, the airbag is fixed, at the second fixation spots, to the second fixing spots spaced rearward of the vehicle from the first fixation spot.

In the state where the airbag is fixed to the fixing spots at the respective fixation spots, the distance from the first fixation spot to the second fixation spots via the upper surface of the airbag is longer than the distance from the first fixation spot to the second fixation spots via the lower surface of the airbag. The distance difference limits the inflation of the airbag at a section ranging from the first fixation spot to the second fixation spots via the lower surface of the airbag. Also, the distance difference allows the inflation of the airbag at a section ranging from the first fixation spot to the second fixation spots via the upper surface of the airbag. As a result, the airbag inflates mostly upward without inflating downward, so that the object-to-be-restrained is efficiently restrained. In this manner, the simple structure, in which the distances between the first fixation spot and the second fixation spots are set, allows the object-to-be-restrained to be efficiently restrained by the airbag.

It is preferable that airbag is adapted to be disposed in the seat portion in a state of being deployed without being filled with the inflation fluid, is adapted to be fixed to the first fixing spot at the first fixation spot, and is adapted to be fixed to the second fixing spots at the second fixation spots.

In this configuration, the airbag is disposed while being deployed without being filled with the inflation fluid in advance, is fixed to the first fixing spot at the first fixation spot, and is fixed to the second fixing spots at the second fixation spots. When the airbag is inflated, the airbag is already fixed to the fixing points at the respective fixation spots. Therefore, compared to the case where the airbag is fixed to at least one fixing spot at the corresponding fixation spot, the structure is simplified.

In general, if an airbag is folded, the folded portion acts as a resistance against deployment and inflation. Thus, it is preferable that the airbag be disposed in a state of being unfolded and deployed in advance. Compared to a case where the airbag is folded, there are fewer elements that act as resistance against deployment and inflation, so that the airbag is inflated in a short period.

It is preferable that the airbag is adapted to be disposed in the seat portion in a state where a section of the upper surface between the first fixation spot and the second fixation spots is sagged.

Further, it is preferable that the airbag is adapted to be disposed in the seat portion with the second fixation spots spaced forward of the vehicle from a rear end of the airbag.

If the airbag is disposed in a state of being deployed without being filled with inflation fluid, and is fixed at the two fixation spots, the treatment of a section on the upper surface of the airbag that is longer than a section on the lower surface is difficult. Depending on the way of treatment, the longer section can hinder the smooth inflation of the airbag.

In contrast, the disposition of the airbag in the seat portion with a section of the upper surface between the first fixation spot and the second fixation spots sagged allows the entire airbag including the longer section to be smoothly inflated. Also, the disposition of the airbag in the seat portion in a state where the second fixation spots are spaced forward of the vehicle from the rear end of the airbag allows the entire airbag including the longer section to be smoothly inflated.

It is preferable that a section of the lower surface of the airbag between the first fixation spot and the second fixation spots have a higher stiffness than a section of the upper surface between the first fixation spot and the second fixation spots.

In this configuration, when inflation fluid from the inflation fluid generator is supplied to the airbag and is diffused in the airbag, the pressure of the inflation fluid is received by the stiffer section between the fixation spots, and an upward reaction force is produced. The reaction force reliably inflates the airbag upward.

It is preferable that a section of the upper surface of the airbag between the first fixation spot and the second fixation spots be made of nonmetal fabric, and a section of the lower surface of the airbag between the first fixation spot and the second fixation spots be made of metal fabric.

In general, metal fabric has a higher stiffness than nonmetal fabric. Therefore, by forming the section of the upper surface of the airbag between the fixation spots of nonmetal fabric, and the section of the lower surface airbag between the fixation spots of metal fabric, the stiffness of the lower surface of the airbag is made higher than that of the upper surface.

It is preferable that the airbag be made of nonmetal fabric, and that a metal plate be fixed to a section of the lower surface of the airbag between the first fixation spot and the second fixation spots.

A metal plate has a higher stiffness than nonmetal fabric. Therefore, if the airbag is made of nonmetal fabric, and a metal plate is fixed to a section of the lower surface of the airbag between the fixation spots, the lower surface of the airbag has a higher stiffness than that of the upper surface.

It is preferable that the airbag be made of nonmetal fabric, that a bag-shaped accommodation portion be formed in a section of the lower surface of the airbag between the first fixation spot and the second fixation spots, and that a metal plate be accommodated in the accommodation portion.

A metal plate has a higher stiffness than nonmetal fabric. Therefore, if the entire airbag is made of nonmetal fabric, and a metal plate is accommodated in the bag-shaped accommodation portion formed in a section of the lower surface of the airbag between the fixation spots, the lower surface of the airbag has a higher stiffness than that of the upper surface. Since the metal plate is accommodated in the bag-shaped accommodation portion of the airbag, the metal plate is indirectly fixed to the airbag. This simplifies the structure for fixing the metal plate to the airbag.
Fig. 1 is a cross-sectional side view illustrating a vehicle seat to which an airbag apparatus according to one embodiment of the present embodiment is applied;
Fig. 2 is a perspective view illustrating the vehicle seat and the seat belt;
Fig. 3 is a partial cross-sectional side view showing the structure of the airbag shown in Fig. 1;
Fig. 4 is a perspective view showing a seat frame and an accommodation case in the vehicle seat;
Fig. 5 is an enlarged partial cross-sectional side view illustrating section X in Fig. 1;
Fig. 6 is a partial cross-sectional side view showing a state in which the airbag has been inflated from the state of Fig. 5;
Fig. 7 is a partial cross-sectional view illustrating another embodiment in which an airbag is disposed in a seat portion in a different manner;
Fig. 8 is a partial cross-sectional view illustrating another embodiment in which an airbag different from those in the previous embodiments is disposed in a seat portion;
Fig. 9 is also a partial cross-sectional view illustrating another embodiment in which an airbag different from those in the previous embodiments is disposed in a seat portion;
Fig. 10 is also a partial cross-sectional view illustrating another embodiment in which an airbag different from those in the previous embodiments is disposed in a seat portion;
Fig. 11 is also a partial cross-sectional view illustrating another embodiment in which an airbag different from those in the previous embodiments is disposed in a seat portion; and
Fig. 12 is also a partial cross-sectional view illustrating another embodiment in which an airbag different from those in the previous embodiments is disposed in a seat portion.

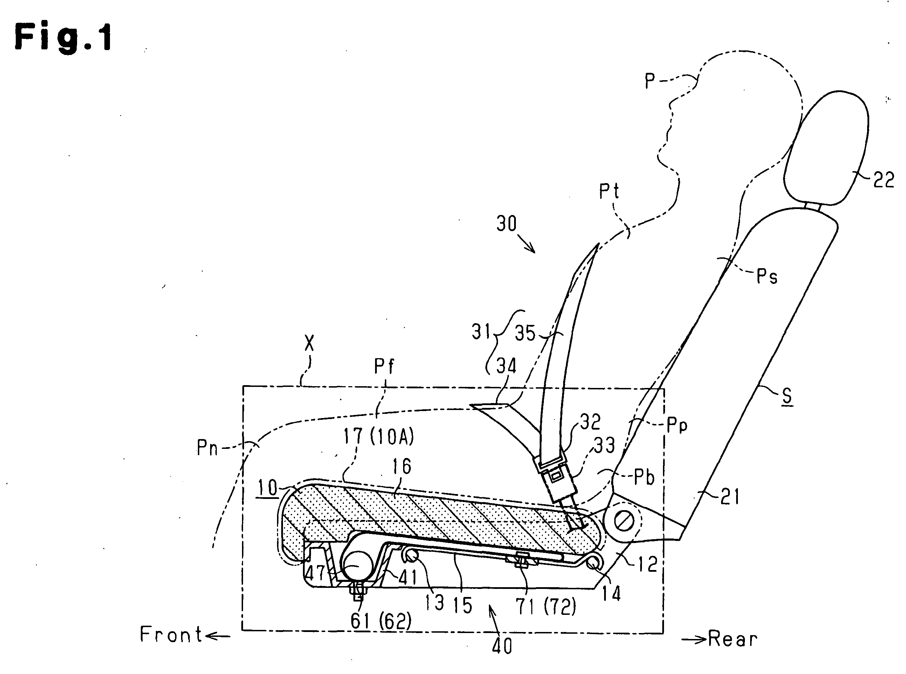

One embodiment of the present invention will now be described with reference to Figs. 1 to 6.
In the following, the traveling direction of the vehicle is defined as a forward direction. The backward, upward, downward, leftward, and rightward directions are defined with reference to the forward direction.
In each of the drawings, "front" represents the front side of the vehicle, "rear" represents the rear side of the vehicle, "inside" represents inner side of the vehicle, and "outside" represents the outer side of the vehicle.

First, a vehicle seat to which an airbag apparatus of the present embodiment is applied will be schematically described.

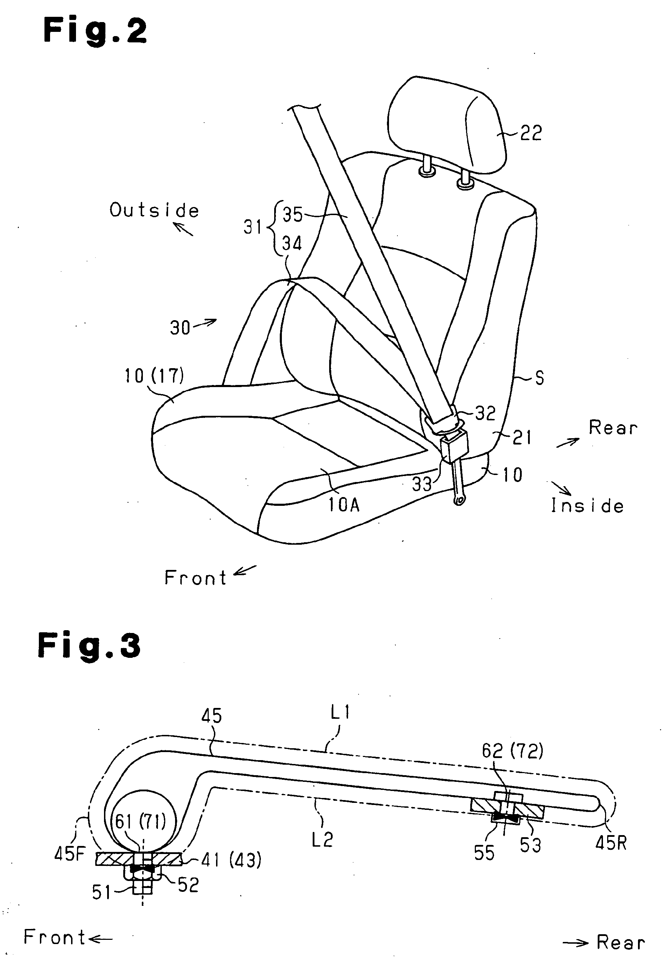

As shown in Figs. 1 and 2, a vehicle seat S has a seat portion (seat cushion) 10, a backrest (seat back) 21 that is tiltably arranged at the rear end of the seat portion 10, and a headrest 22 arranged on top of the backrest 21.

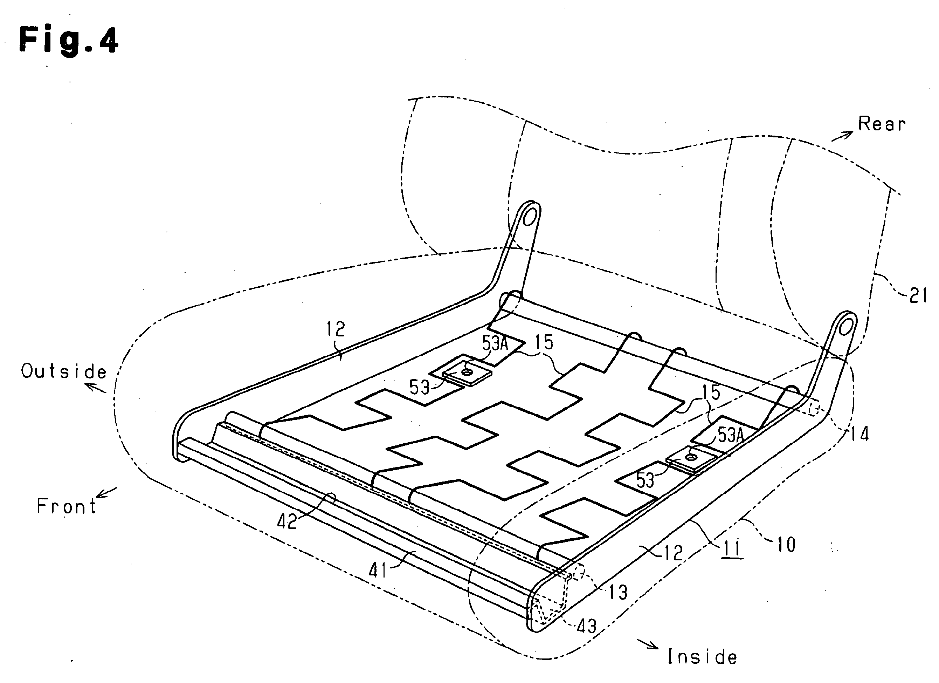

The seat portion 10 is a part on which an occupant P, or an object-to-be restrained, is seated. As shown in Fig. 4, a seat frame 11, which forms a framework of the seat portion 10, is constituted by left and right side frame portions 12, 12, front and rear coupling frame portions 13, 14, and multiple wire frame portions 15. The left and right side frame portions 12, 12 are each formed as a plate that extends forward and rearward, and are spaced from each other along the width of the vehicle. The front and rear coupling frame portions 13, 14 are each formed of a rod extending along the width of the vehicle, and are spaced from each other along the front-rear direction. The coupling frame portions 13, 14 are bridged between the side frame portions 12, 12. The wire frame portions 15 function as tension springs for improving the sitting comfort, and each of the wire frames 15 is formed into a shape of a series of the letter S. The wire frame portions 15 are arranged at intervals along the width of the vehicle, and hung between the front and rear coupling frame portions 13, 14.

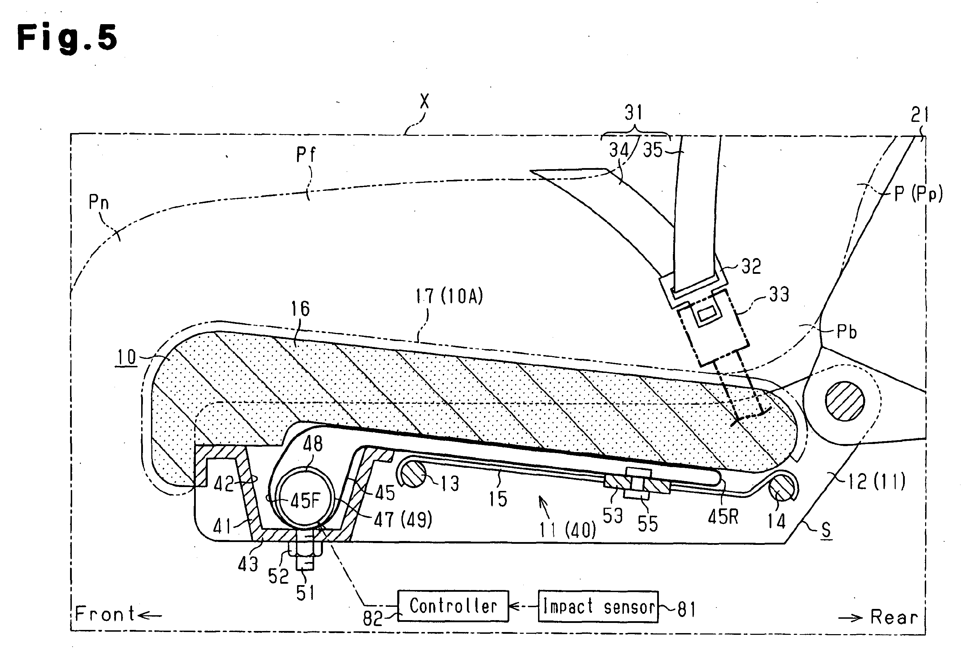

As shown in Fig. 5, a seat cushion 16 is arranged on the seat frame 11. The seat cushion 16 is covered with a cover 17, which is made of fabric or leather.

The vehicle is equipped with a seat belt apparatus 30 for restraining an occupant P seated on the vehicle seat S.

As shown in Figs. 1 and 2, the seat belt apparatus 30 has belt-like webbing 31 for restraining the occupant P, a tongue 32 attached to the webbing 31 to be movable along the longitudinal direction of the webbing 31, and a buckle 33 provided on the left side of the seat portion 10. The tongue 32 is detachably engaged with the buckle 33. The webbing 31 has a fixed end that is fixed to opposite side of the seat portion 10 to the buckle 33, and a free end that is wound by a seat belt retractor (not shown). In the seat belt apparatus 30, the tongue 32 is slid relative to the webbing 31, so as to change the distances of a lap belt portion 34 and a shoulder belt portion 35.

The lap belt portion 34 is a portion of the webbing 31 between the tongue 32 to the fixed end, and traverses the lumbar region Pp of the seated occupant P, while extending horizontally from one side of the lumbar region Pp to the other side via the front side of the lumbar region Pp. The lap belt portion 34 mainly restrains the lumbar region Pp. The shoulder belt portion 35 is a portion of the webbing 31 between the tongue 32 and the seat belt retractor, and traverses from the shoulder region Ps of the seated occupant P to a side of the lumbar region Pp via the thorax Pt. The shoulder belt portion 35 mainly protects the shoulder region Ps of the occupant P.

The vehicle is equipped with an airbag apparatus 40 that suppresses the submarine phenomenon. The submarine phenomenon refers to a phenomenon in which, when an impact due to a front collision is applied to a vehicle from front, the lumbar region Pp of the occupant P restrained to the vehicle seat S by the seat belt apparatus 30 may be disengaged from the lap belt portion 34 and move forward.

As shown in Fig. 5, the airbag apparatus 40 includes an accommodation case 41, an airbag 45, and an inflator assembly 47. The accommodation case 41 is arranged in the vicinity of the front end of the coupling frame portion 13. The accommodation case 41 has an accommodation recess 42 with an open upper face, and fixed to the left and right side frame portions 12, 12 at both ends in a direction along the width of the vehicle.

The airbag 45 is formed as a bag of woven fabric formed by polyester threads or polyamide threads. The airbag 45 thus has a high stiffness and flexibility. The airbag 45 is, in a deployed state, disposed blow a seating face 10A of the seat portion 10, more specifically, between the seat cushion 16 and the seat frame 11. A front end 45F of the deployed airbag 45 is located at a position below the knees Pn of the occupant seated on the seat portion 10, an rear end 45R is located below the buttocks Pb.

The inflator assembly 47 supplies inflation gas, which is inflation fluid, to the airbag 45, and includes an inflator 48, which is an inflation fluid generator, and a retainer 49 attached to the outer surface of the inflator 48. The inflator 48 is substantially cylindrical and accommodates a gas generating agent (not shown). The inflator 48, which is of a pyro type, generates gas by combustion reaction of the gas generating agent. The inflator 48 has gas outlets (not shown) through which generated gas is jetted out. A harness (not shown), which is wiring for applying control signals to the inflator 48, is connected one end of the inflator 48.

In place of the pyro type inflator using the gas generating agent, it is possible to use a hybrid type inflator which breaks a partition wall of a high-pressure gas cylinder filled with a high-pressure gas by a low explosive so as to jet out the gas.

On the other hand, most of the retainer 49 is formed as a thin and elongated cylinder that extends along the width of the vehicle, by bending, for example, a metal plate. Bolts 51 are planted to several positions of the retainer 49.

The inflator assembly 47 is arranged in a front portion of the airbag 45. The bolts 51 of the retainer 49 extend through the front lower part of the airbag 45 and a bottom 43 of the accommodation case 41, which is a part of the vehicle structure. Nuts 52 are threaded to the bolts 51 so that the inflator assembly 47 is fastened to the accommodation case 41, together with the airbag 45. In this embodiment, as shown in Fig. 3, portions of the bottom 43 of the accommodation case 41 through which the bolts 51 extend are defined as first fixing spots 61. Portions of the airbag 45 through which the bolts 51 extend are defined as first fixation spots 71. As described above, the airbag 45 is fixed at the first fixation spots 71 to the first fixing spots 61 of the accommodation case 41 by means of the bolts 51 and the nuts 52.

Further, the airbag 45 is fixed at second fixation spots 72 to second fixing spots 62 provided in the vehicle structure. Specifically, plate-like support portions 53 are provided at positions directly below the wire frame portion 15 and slightly forward of the rear end 45R of the airbag 45. In the present embodiment, a thin and elongated lateral member (not shown) extends along the width of the vehicle between the left and right side frame portions 12, 12, and the support portions 53 are fixed to two positions of the lateral member that are spaced from each other along the direction of the vehicle width (see Fig. 4). A rivet 55 extends through the airbag 45 and each support portion 53, and the distal end of the rivet 55 is pressed down to fasten the airbag 45 and the support portion 53 to each other. In this fastening structure, a portion of each support portion 53 through which the rivet 55 extends is defined as the second fixing spot 62, and each portion of the airbag 45 through which the rivet 55 extends is defined as the second fixation spot 72. The airbag 45 is fixed at the second fixation spots 72 to the second fixing spots 62 of the support portions 53 by means of the rivets 55. Instead of the rivets 55, the airbag 45 may be fixed to the second fixing spots 62 at the second fixation spots 72 by means of fasteners (not shown) such as bolts and nuts.

The fixation at the first and second fixation spots 71, 72 sets a distance L1 from the first fixation spots 71 to the second fixation spots 72 through the upper surface of the airbag 45 longer than a distance L2 from the first fixation spots 71 to the second fixation spots 72 through the lower surface of the airbag 45.

The first and second fixation spots 71, 72, which satisfy L1 > L2 in relation to the first and second fixing spots 61, 62, correspond to inflation manner limiting means that allows the airbag 45 to be inflated upward while limiting downward inflation.

The inflator 48 may be integrated with the retainer 49.

The airbag the airbag apparatus 40 further includes an impact sensor 81 and a controller 82 as shown in Fig. 5. The impact sensor 81 is an acceleration sensor and attached to the front bumper of the vehicle. The impact sensor 81 detects an impact applied to the front bumper from front, thereby detecting collision with a pedestrian. The controller 82 controls the operation of the inflator 48 based on a detection signal from the impact sensor 81.

The airbag apparatus 40 of the present embodiment is constructed as described above. In the airbag the airbag apparatus 40, since the airbag 45 is located between the seat cushion 16 and the seat frame 11, the airbag 45 is hardly damaged by members outside of (around) the seat portion 10.

If an occupant P seated on the vehicle seat S changes his/her posture by displacing the buttocks Pb or femoral region Pf on the seat portion 10, a force is generated that acts to displace the airbag 45 from the initial position through the seat cushion 16. However, the airbag 45 is fixed to the structure of the vehicle (the accommodation case 41, the support portions 53) at the first and second fixation spots 71, 72, which are spaced from each other in the front-rear direction. Therefore, even if such a force is applied to the airbag 45, the airbag 45 is unlikely to be displaced from the initially disposed position.

When an impact of an magnitude greater than a predetermined value is applied to the front bumper due to, for example, a front collision of the vehicle, and the impact sensor 81 detects the collision, the controller 82 sends a drive current to the inflator 48 based on the detection signal. Heating based on the drive current causes the gas generating agent in the inflator 48 to generate high temperature and high-temperature and pressure inflation gas, which is in turn jetted upward or diagonally rearward from the gas outlets. The inflation gas is supplied to each section of the airbag 45, which is disposed in a deployed state.

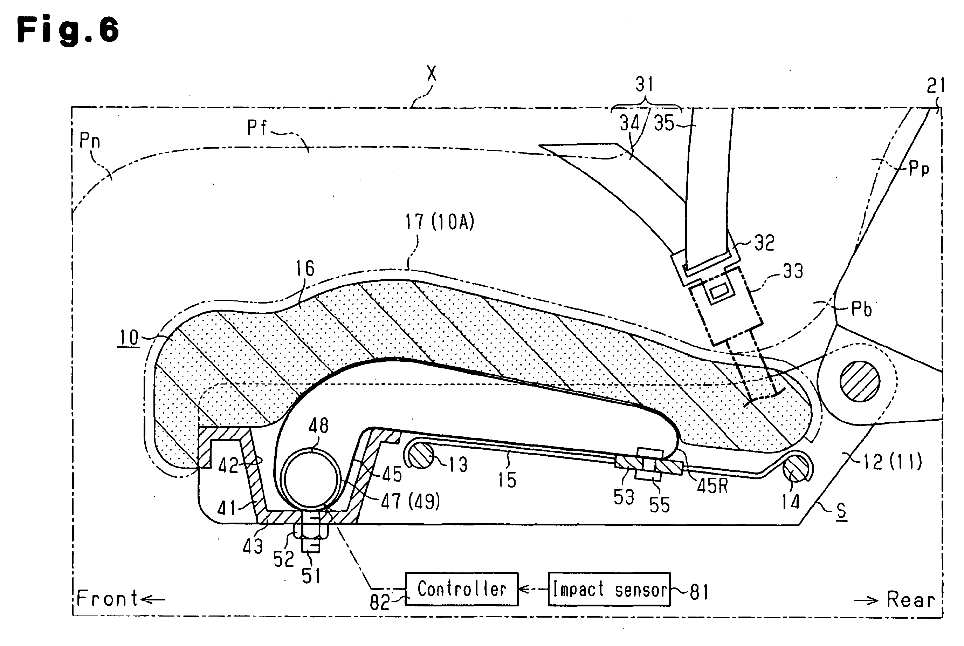

Prior to the inflation, the airbag 45 is already fixed at the first fixation spots 71 to the first fixing spots 61 of the vehicle structure, and fixed at the second fixation spots 72 to the second fixing spots 62 (the support portions 53). In this state, the distance L1 from the first fixation spots 71 to the second fixation spots 72 via the upper surface of the airbag 45 is longer than the distance L2 from the first fixation spots 71 to the second fixation spots 72 via the lower surface of the airbag 45. The difference between the distances L1 and L2 limits the inflation of the airbag 45 in a section ranging from the first fixation spots 71 to the second fixation spots 72 via the lower surface of the airbag 45. Also, the distance difference allows the inflation of the airbag 45 at a section ranging from the first fixation spots 71 to the second fixation spots 72 via the upper surface of the airbag 45. As a result, the airbag 45 inflates mostly upward without inflating downward as shown in Fig. 6. Also, the airbag 45 is inflated first in a front section close to the inflator 48, and then subsequently inflates toward the rear section. The inflation gas is not used for unnecessary downward inflation of the airbag 45. Accordingly, a greater amount of the inflation fluid is effectively used for the upward inflation of the airbag 45. As a result, the airbag 45 is efficiently inflated upward.

When being inflated, the airbag 45 raises the seat cushion 16. This in turn raises the seating face 10A of the seat portion 10 in a manner intended by the designer, and the region from the back of the knees Pn to the rear end of the femoral region Pf (a part in front of the buttocks Pb) of the occupant P is pushed. The femoral region Pf of the occupant P is raised and pressed against the lap belt portion 34, so that the restraining force of the lap belt portion 34 is increased. Accordingly, forward movement of the occupant P on the seat portion 10, that is, the submarine phenomenon, is reliably suppressed. Particularly, since the airbag is consecutively inflated from the front section toward the rear section, the seating face 10A is raised in the corresponding manner and raises the seated occupant P from the knees Pn. This further reliably suppresses the submarine phenomenon.

As described above, contrivances for controlling the manner in which the airbag 45 is inflated are provided in the airbag 45 itself. Thus, the vehicle seat S does not requires a support mechanism for supporting a pressure receiving plate (reaction force generating plate) as disclosed in Japanese Laid-Open Patent Publication No. 2003-306122 or a device for actuating the support mechanism to thrust the pressure receiving plate.

As described above, the airbag 45 receives the load of the weight of the occupant P when being inflated. The load is received through a large area ranging from the knees Pn to the femoral region Pf. Thus, the impact caused by the inflation of the airbag 45 acts to the occupant P in a dispersed manner, and is not concentrated in a specific section.

In general, if the airbag 45 is folded, the folded portion acts as a resistance against deployment and inflation. In this regard, the airbag 45 of the present embodiment is not folded, but disposed in an already deployed state. Therefore, compared to a case where the airbag 45 is folded, there are fewer elements that act as resistance against deployment and inflation, so that the airbag 45 is inflated in a short period.

The present embodiment described above has the following advantages.
(1) Contrivances for allowing upward inflation of the airbag 45 and limiting downward inflation are provided in the airbag 45 itself. Therefore, the structure of the vehicle seat S is not complicated, and no space for a support mechanism is required in the vehicle seat S. Thus, an object-to-be-restrained (occupant P) is efficiently restrained by the airbag 45.
(2) The distance L1 from the first fixation spots 71 to the second fixation spots 72 via the upper surface of the airbag 45 is set longer than the distance L2 from the first fixation spots 71 to the second fixation spots 72 via the lower surface of the airbag 45 (see Fig 3). Thus, the inflation manner limiting means is constructed by a simple structure where the distances L1, L2 between the first and second fixation spots 71 and 72 are different between the upper and lower surfaces of the airbag 45, and the manner in which the airbag 45 is inflated is controlled, accordingly. The advantage of the item (1) shown above is therefore ensured.
(3) The airbag 45 is disposed in a state of being deployed without being filled with inflation gas. The airbag 45 is fixed at the first fixation spots 71 to the first fixing spots 61 and at the second fixation spots 72 to the second fixing spots 62 . This ensures the advantage of the item (2) shown above. Also, the structure is simplified compared to a structure in which the airbag 45 is fixed at at least either of the fixation spots 71 or 72 to the corresponding ones of the fixing spots 61 and 62 when the airbag 45 is being inflated.
   Further, compared to a case where the airbag 45 is folded, there are fewer elements that act as resistance against deployment and inflation, and the airbag 45 is inflated in a short period.
(4) If the airbag 45 is disposed in a state of being deployed without being filled with inflation fluid, and is fixed at the fixation spots 71, 72, the treatment of a section on the upper surface of the airbag 45, which is longer than a section on the lower surface, is difficult. Depending on the way of treatment, the longer section can hinder the smooth inflation of the airbag 45.

In this regard, since the airbag 45 of the illustrated embodiment is disposed in the seat portion 10 in a state where the second fixation spots 72 are located at positions spaced forward from the rear end 45R of the airbag, the entire airbag 45 including the long section is smoothly inflated.

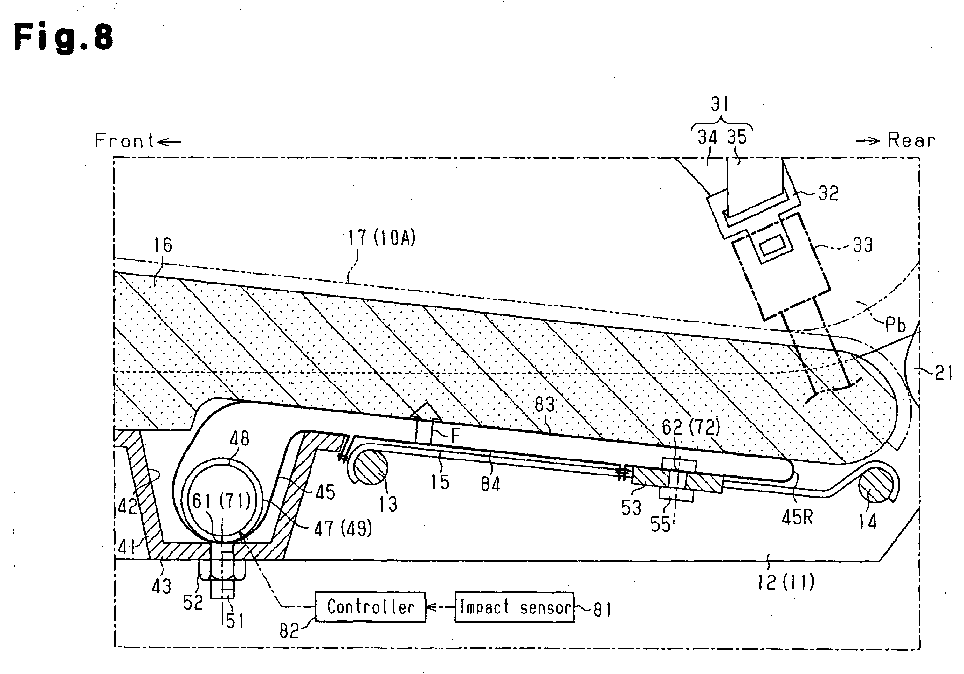

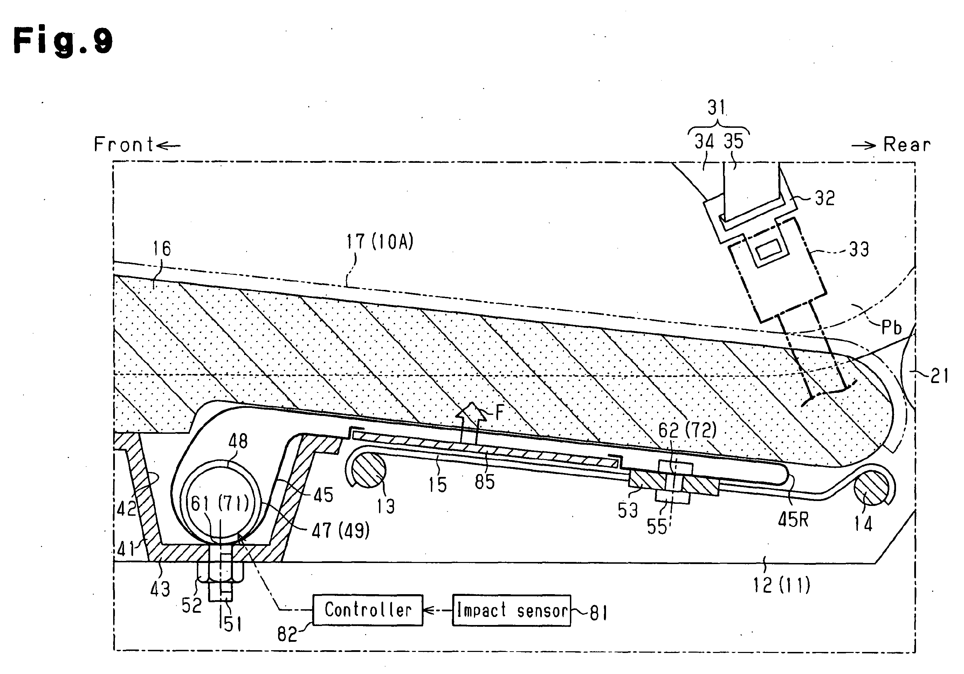

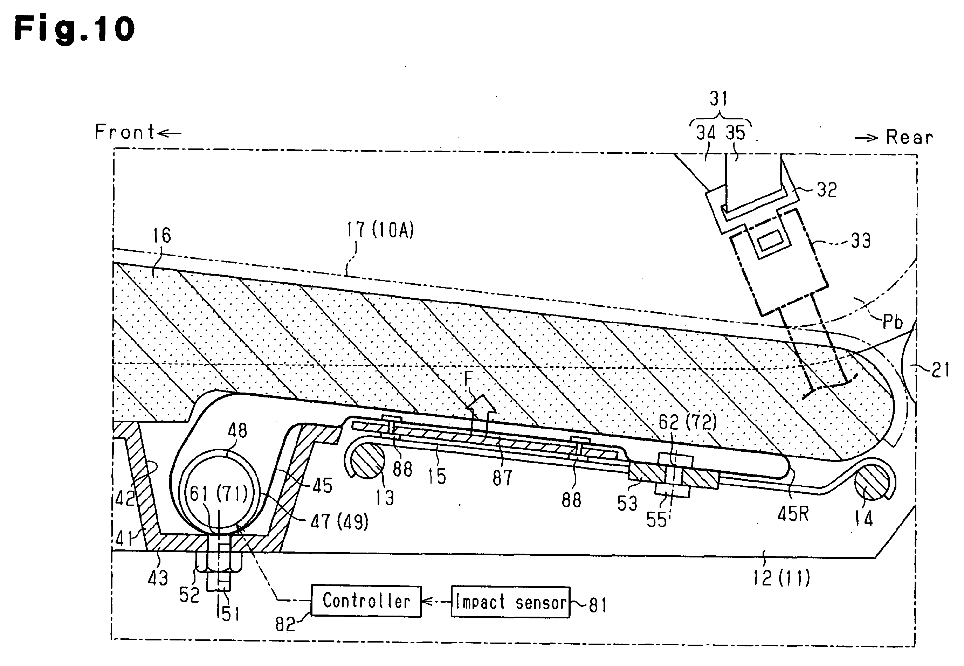

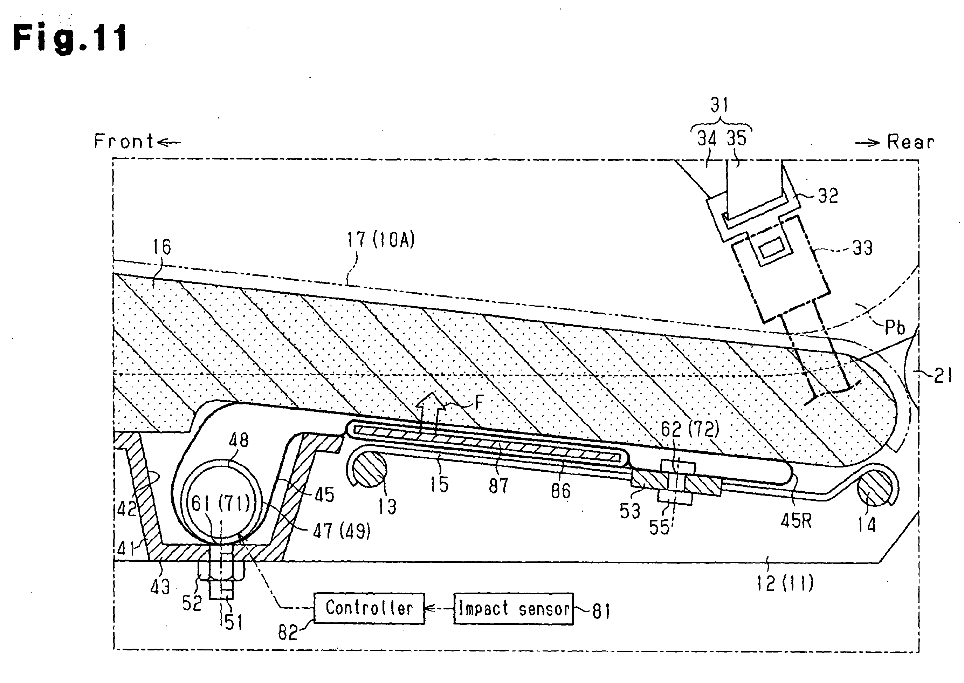

The present invention may be embodied in the following forms.

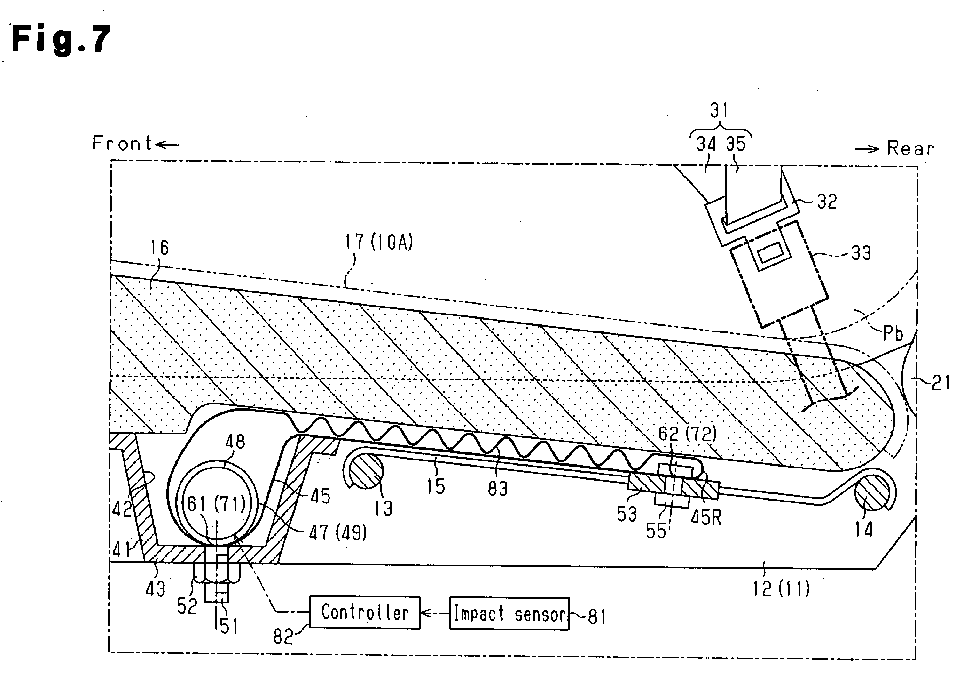

(a) Fig. 7 shows one modified embodiment of treatment of a section in the upper surface of the airbag 45 that is longer than the lower surface. Specifically, the airbag 45 is disposed in the seat portion 10 in a state where a section 83 of the upper surface between the first fixation spots 71 and the second fixation spots 72 is sagged. In this case, as in the above embodiment in which the airbag 45 is disposed in the seat portion 10 in a state where the second fixation spots 72 are located at positions spaced forward from the rear end 45R of the airbag, the long section does not hinder the smooth deployment of the entire airbag 45.
(b) As shown in Figs. 8 to 11, a section 84 of the lower surface of the airbag 45 between the fixation spots 71, 72 may have a higher stiffness than that of a section 83 of the upper surface of the airbag 45 between the fixation spots 71, 72. In this configuration, when inflation gas is supplied from the inflator 48 to the airbag 45 and the gas is diffused in the airbag 45, the pressure of the inflation gas is received by the section 84 between the fixation spots 71, 72 having an increased stiffness, so that an upward reaction force F is generated. The reaction force F reliably inflates the airbag 45 upward.
(c) In general, metal fabric has a higher stiffness than nonmetal fabric. Therefore, as in the modified embodiment shown in Fig. 8, a section 83 of the upper surface of the airbag 45 between the fixation spots 71, 72 may be made of nonmetal fabric, and a section 84 of the lower surface of the airbag 45 between the fixation spots 71, 72 may be made of metal fabric. That is, the section 84 may be made of a fabric of metallic fiber. This makes the stiffness of the lower surface of the airbag 45 higher than that of the upper surface, and thus ensures the advantage of the item (b) shown above.
(c) In general, metal fabric has a higher stiffness than nonmetal fabric. Therefore, as in the modified embodiment shown in Fig. 9, at least part of a section of the lower surface of the airbag 45 between the fixation spots 71, 72 may be formed by a metal plate 85, while forming most of the airbag 45 with nonmetal fabric. The metal plate 85 may be fixed to the airbag 45. This makes the stiffness of the lower surface of the airbag 45 higher than that of the upper surface, and thus ensures the advantage of the item (b) shown above.
(e) As in the modified embodiment shown in Fig. 10, the entire airbag 45 may be made of nonmetal fabric, and, the metal plate 87 may be located between the airbag 45 and the wire frame portion 15. The metal plate 87 is fastened to the airbag 45 by means of fasteners 88 such as rivets. This configuration achieves the same advantage as that of the item (d) shown above.
(f) As in the modified embodiment shown in Fig. 11, an accommodation portion 86 may be formed on the lower surface of the airbag 45 between the fixation spots 71, 72 and a metal plate 87 may be accommodated in the accommodation portion 86, while the entire airbag 45 is made of nonmetal fabric. This configuration achieves the same advantage as that of the item (d) shown above. Also, since the metal plate 87 is accommodated in the accommodation portion 86, the metal plate 87 is indirectly fixed to the airbag 45. Thus, the metal plate 87 is fixed to the airbag 45 by means of a simple structure.
(g) The airbag 45 may be disposed between the seat cushion 16 and the seat frame 11 in a folded state. The airbag 45 may be fixed only at either of the first fixation spots 71 and the second fixation spots 72 to the corresponding ones of the fixing spots 61 and 62 of the vehicle structure. In this case, it may be configured that the other one of the fixation spots 71, 72 is moved to and fixed to the corresponding one of the fixing spots 61, 62 when the airbag 45 is inflated.

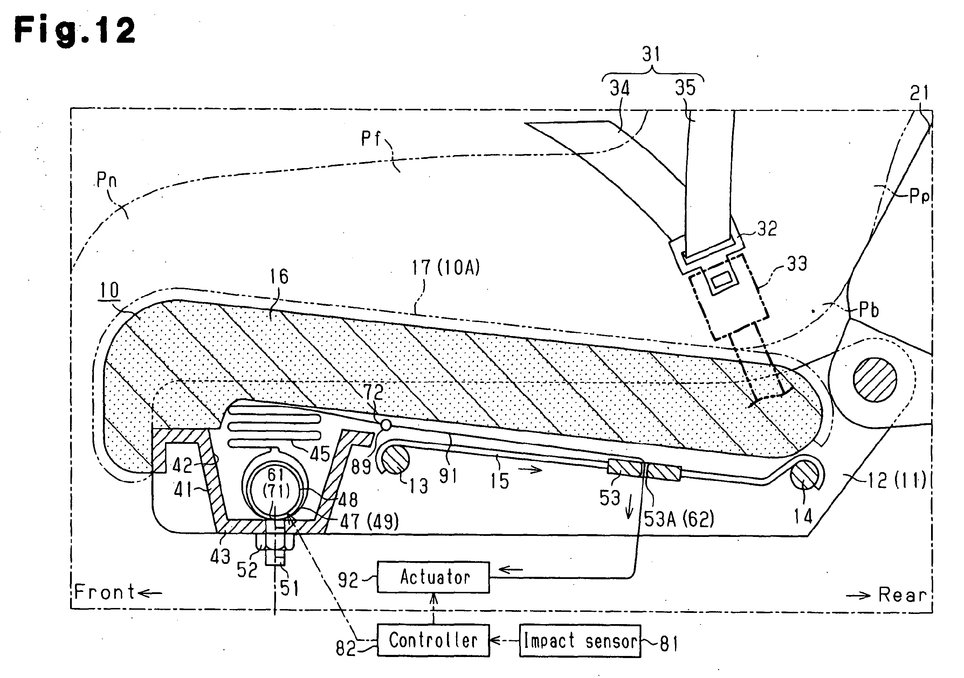

For example, as shown in Fig. 12, the airbag 45 may be fixed at the first fixation spots 71 to the first fixing spots 61. In this case, a stopper 89 having a size that cannot pass the hole 53A of the support portion 53 is provided at each second fixation spot 72 of the airbag 45, and one end of a strap 91 is connected to the stopper 89. The strap 91 is drawn rearward and passed through the hole 53A of the support portion 53, and an actuator 92 serving as moving means is connected to the other end of the strap 91. The actuator 92 may be, for example, a micro gas generator (MGG). The actuator 92 has a cylinder and a piston that is retractably accommodated in the piston. When receiving a predetermined drive signal, the actuator 92 is ignited and generates gas, which in turn thrusts the piston from the cylinder. The other end of the strap 91 is connected to the piston. The strap 91 may be replaced by a cord.

In this configuration, the airbag 45 is disposed in a state of being folded before being inflated. In this state, the airbag 45 is only fixed at the first fixation spots 71 to the first fixing spots 61 of the vehicle structure (the accommodation the case 41). The second fixation spots 72 are not fixed but movable. Since the airbag 45 is folded in the manner shown above, the airbag 45 is in a compact state. Thus, the airbag 45 does not degrade the softness of the seat portion 10, and the riding comfort is hardly degraded.

When an impact applied to the vehicle from the front is detected by an impact sensor 81, the controller 82 activates the actuator 92 to draw the strap 91 based on the detection result, so as to move the stopper 89 to the hole 53A of the support portion 53. Bering greater than the hole 53A, the stopper 89 cannot pass through the support portion 53, and stops when contacting the support portion 53. In this manner, the second fixation spots 72 are moved to and engaged with the second fixing spots 62. The fixation spots 71, 72 of the airbag 45 are fixed to the corresponding fixing spots 61, 62 of the vehicle structure. Compared to a configuration in which the fixation spots 71, 72 are fixed to the fixing spots 61, 62 in advance, respectively, the configuration of Fig. 12 is slightly more complicated because of the moving means (actuator 92) for moving and engaging either the fixation spots 71 or 72. However, the same advantages as the above embodiments above are achieved.

After the second fixation spots 72 are engaged, the inflator 48 is actuated so that the airbag 45 is deployed and inflated.
(h) The present invention may be applied to a vehicle seat S in which the seat cushion 16 is not supported by the wire frame portion 15, but supported by a seat pan, which is a plate-like member.
(i) The present invention may be used to restrain any object-to-be-restrained other than an occupant P. For example, the present invention may be used to restrain a piece of baggage. In a case where a piece of baggage is placed as an object-to-be restrained on the seat portion 10, the same advantages as the above embodiments are achieved.

## Claims

1. An airbag apparatus (40) comprising an airbag (45) adapted to be arranged in a seat portion (10) of a vehicle seat (S), the airbag apparatus (40) being adapted for raising a seating face (10A) of the seat portion (10) by inflating the airbag (45) with inflation fluid from an inflation fluid generator (48), thereby restraining an object-to-be-restrained on the seat portion (10) from moving forward,
wherein the airbag (45) includes inflation manner limiting means (61, 62, 71, 72) that allows upward inflation of the airbag (45) while limiting downward inflation of the airbag (45),
the airbag apparatus (40) being **characterized in that** the inflation manner limiting means (61, 62, 71, 72) includes fixation spots (71, 72) that are fixed to fixing spots (61, 62) provided in a structure of the vehicle at least when the airbag (45) is inflated,
wherein the airbag (45) includes, as the fixation spots, a first fixation spot (71), which is adapted to be fixed to a first fixing spot (61) of the vehicle structure, an a pair of second fixation spots (72), which are adapted to be fixed to a pair of second fixing spots (62), respectively, the second fixing spots (62) being spaced rearward of the vehicle from the first fixing spot (61) and being spaced from each other along a direction of a vehicle width,
wherein the distance from the first fixation spot (71) to the second fixation spot (72) via the upper surface of the airbag (45) is longer than the distance from the first fixation spot (71) to the second fixation spots (72) via the lower surface of the airbag (45), and
wherein the air bag (45) is adapted to be consecutively inflated from a front section thereof toward a rear section thereof.

2. The airbag apparatus (40) according to claim 1, wherein the airbag (45) is adapted to be disposed in the seat portion (10) in a state of being deployed without being filled with the inflation fluid, is adapted to be fixed at the first fixation spot (71) to the first fixing spot (61), and is adapted to be fixed at the second fixation spots (72) to the second fixing spots (62).

3. The airbag apparatus (40) according to claim 2, wherein the airbag (45) is adapted to be disposed in the seat portion in a state where a section (83) of the upper surface of the airbag between the first fixation spot (71) and the second fixation spots (72)is sagged.

4. The airbag apparatus (40) according to claim 2, wherein the airbag (45) is adapted to be disposed in the seat portion (10) with the second fixation spots (72) spaced forward of the vehicle from a rear end of the airbag (45).

5. The airbag apparatus (40) according to any one of claims 2 to 4, wherein a section (84) of the lower surface of the airbag (45) between the first fixation spot (71) and the second fixation spots (72) has a higher stiffness than a section (83) of the upper surface of the airbag between the first fixation spot (71) and the second fixation spots (72).

6. The airbag apparatus (40) according to claim 5, wherein a section (83) of the upper surface of the airbag (45) between the first fixation spot (71) and the second fixation spots (72) is made of nonmetal fabric, and a section (84) of the lower surface of the airbag between the first fixation spot (71) and the second fixation spots (72) is made of metal fabric.

7. The airbag apparatus (40) according to claim 5, wherein the airbag (45) is made of nonmetal fabric, and a metal plate (85) is fixed to a section of the lower surface of the airbag (45) between the first fixation spot (71) and the second fixation spots (72).

8. The airbag apparatus (40) according to claim 5, wherein the airbag (45) is made of nonmetal fabric, a bag-shaped accommodation portion (86) is formed in a section of the lower surface of the airbag (45) between the first fixation spot (71) and the second fixation spots (72), and a metal plate (87) is accommodated in the accommodation portion (86).

## Patentansprüche

1. Airbagvorrichtung (40) mit einem Airbag (45), der angepasst ist, in einem Sitzbereich (10) eines Fahrzeugsitzes (S) angeordnet zu werden, wobei die Airbagvorrichtung (40) zum Anheben einer Sitzfläche (10A) des Sitzbereichs (10) durch Aufblasen des Airbags (45) mit einem Befiillungsfluid aus einem Befiillungsfluiderzeuger (48) angepasst ist und dabei ein zurückzuhaltendes Objekt auf dem Sitzbereich (10) daran hindert, sich nach vorne zu bewegen,
wobei der Airbag (45) ein das Aufblasverhalten einschränkendes Mittel (61, 62, 71, 72) aufweist, das ein Aufblasen des Airbags (45) nach oben zulässt, während es ein Aufblasen des Airbags (45) nach unten beschränkt,
wobei die Airbagvorrichtung (40) **dadurch gekennzeichnet ist, dass** das das Aufblasverhalten einschränkende Mittel (61, 62, 71, 72) Befestigungspunkte (71, 72) aufweist, die an in einer Struktur des Fahrzeugs vorgesehenen Befestigungspunkten (61, 62) befestigt sind, wenigstens wenn der Airbag (45) aufgeblasen ist,
wobei der Airbag (45) als die Befestigungspunkte einen ersten Befestigungspunkt (71), der angepasst ist, an einem ersten Befestigungspunkt (61) der Fahrzeugstruktur befestigt zu sein, und ein Paar zweite Befestigungspunkte (72) aufweist, die angepasst sind, entsprechend an einem Paar zweiter Befestigungspunkte (62) befestigt zu sein, wobei die zweiten Befestigungspunkte (62) von dem ersten Befestigungspunkt (61) in Richtung nach hinten des Fahrzeugs beabstandet sind und voneinander entlang einer Fahrzeugbreitenrichtung beabstandet sind,
wobei der Abstand von dem ersten Befestigungspunkt (71) zu dem zweiten Befestigungspunkt (72) über die Oberseite des Airbags (45) länger ist als der Abstand von dem ersten Befestigungspunkt (71) zu den zweiten Befestigungspunkten (72) über die Unterseite des Airbags (45), und
wobei der Airbag (45) angepasst ist, fortlaufend von einem vorderen Abschnitt davon in Richtung eines hinteren Abschnitts davon aufgeblasen zu werden.

2. Airbagvorrichtung (40) nach Anspruch 1, wobei der Airbag (45) angepasst ist, in dem Sitzbereich (10) in einem entfalteten Zustand angeordnet zu sein, ohne mit dem Befüllungsfluid befiillt zu sein, angepasst ist, über den ersten Befestigungspunkt (71) an dem ersten Befestigungspunkt (61) befestigt zu sein, und angepasst ist, über die zweiten Befestigungspunkte (72) an den zweiten Befestigungspunkten (62) befestigt zu sein.

3. Airbagvorrichtung (40) nach Anspruch 2, wobei der Airbag (45) angepasst ist, in dem Sitzbereich (10) in einem Zustand angeordnet zu sein, bei dem ein Abschnitt (83) der Oberseite des Airbags zwischen dem ersten Befestigungspunkt (71) und den zweiten Befestigungspunkten (72) durchhängt.

4. Airbagvorrichtung (40) nach Anspruch 2, wobei der Airbag (45) angepasst ist, in dem Sitzbereich (10) mit den zweiten Befestigungspunkten (72) von einem hinteren Ende des Airbags (45) beabstandet in Richtung nach vorne des Fahrzeugs angeordnet zu sein.

5. Airbagvorrichtung (40) nach einem der Ansprüche 2 bis 4, wobei ein Abschnitt (84) der Unterseite des Airbags (45) zwischen dem ersten Befestigungspunkt (71) und dem zweiten Befestigungspunkten (72) eine höhere Steifigkeit als ein Bereich (83) der Oberseite des Airbags zwischen dem ersten Befestigungspunkt (71) und den zweiten Befestigungspunkten (72) aufweist.

6. Airbagvorrichtung (40) nach Anspruch 5, wobei ein Abschnitt (83) der Oberseite des Airbags (45) zwischen dem ersten Befestigungspunkt (71) und den zweiten Befestigungspunkten (72) aus einem nicht-metallischen Gewebe hergestellt ist, und ein Abschnitt (84) der Unterseite des Airbags zwischen dem ersten Befestigungspunkt (71) und den zweiten Befestigungspunkten (72) aus einem metallischen Gewebe hergestellt ist.

7. Airbagvorrichtung (40) nach Anspruch 5, wobei der Airbag (45) aus einem nicht-metallischen Gewebe hergestellt ist, und eine Metallplatte (85) an einem Abschnitt der Unterseite des Airbags (45) zwischen dem ersten Befestigungspunkt (71) und den zweiten Befestigungspunkten (72) befestigt ist.

8. Airbagvorrichtung (40) nach Anspruch 5, wobei der Airbag (45) aus einem nicht-metallischen Gewebe hergestellt ist, ein taschenförmiger Aufnahmebereich (86) in einem Abschnitt der Unterseite des Airbags (45) zwischen dem ersten Befestigungspunkt (71) und den zweiten Befestigungspunkten (72) ausgebildet ist, und eine Metallplatte (87) in dem Aufnahmebereich (86) aufgenommen ist.

## Revendications

1. Appareil à coussin d'air (40) comprenant un coussin d'air (45) adapté pour être aménagé dans une portion de siège (10) d'un siège de véhicule (S), l'appareil à coussin d'air étant adapté pour relever une face d'assise (10A) de la portion de siège (10) en gonflant le coussin d'air (45) avec un fluide de gonflage provenant d'un générateur de fluide de gonflage (48), en retenant ainsi un objet à retenir sur la portion de siège (10) pour l'empêchant de se déplacer en avant,
dans lequel le coussin d'air (45) comprend un moyen de limitation de mode de gonflage (61, 62, 71, 72) qui permet un gonflage ascendant du coussin d'air (45) tout en limitant le gonflage descendant du coussin d'air (45),
l'appareil à coussin d'air (40) étant **caractérisé en ce que** le moyen de limitation de mode de gonflage (61, 62, 71, 72) comprend des points de fixation (71, 72) qui sont fixés à des points de fixation (61, 62) aménagés dans une structure du véhicule au moins lorsque le coussin d'air (45) est gonflé,
dans lequel le coussin d'air (45) comprend, comme points de fixation, un premier point de fixation (71) qui est adapté pour être fixé à un premier point de fixation (61) de la structure du véhicule et une paire de seconds points de fixation (72), qui sont adaptés pour être fixés à une paire de seconds points de fixation (62), respectivement, les seconds points de fixation (62) étant espacés du premier point de fixation (61) vers l'arrière du véhicule et étant espacés l'un de l'autre dans le sens de la largeur du véhicule,
dans lequel la distance du premier point de fixation (71) aux seconds points de fixation (72) via la surface supérieure du coussin d'air (45) est supérieure à la distance du premier point de fixation (71) aux seconds points de fixation (72) via la surface inférieure du coussin d'air (45), et
dans lequel le coussin d'air (45) est adapté pour être gonflé consécutivement de sa section avant vers sa section arrière.

2. Appareil à coussin d'air (40) selon la revendication 1, dans lequel le coussin d'air (45) est adapté pour être disposé dans la portion de siège (10) dans un état de déploiement sans être rempli de fluide de gonflage, est adapté pour être fixé au niveau du premier point de fixation (71) au premier point de fixation (61) et est adapté pour être fixé au niveau des seconds points de fixation (72) aux seconds points de fixation (62).

3. Appareil à coussin d'air (40) selon la revendication 2, dans lequel le coussin d'air (45) est adapté pour être disposé dans la portion de siège (10) dans un état où une section (83) de la surface supérieure du coussin d'air entre le premier point de fixation (71) et les seconds points de fixation (72) est affaissé.

4. Appareil à coussin d'air (40) selon la revendication 2, dans lequel le coussin d'air (45) est adapté pour être disposé dans la portion de siège (10) avec les seconds points de fixation (72) espacés en avant du véhicule depuis l'extrémité arrière du coussin d'air (45).

5. Appareil à coussin d'air (40) selon l'une quelconque des revendications 2 à 4, dans lequel une section (84) de la surface inférieure du coussin d'air (45) entre le premier point de fixation (71) et les seconds points de fixation (72) a une rigidité supérieure à la section (83) de la surface supérieure du coussin d'air entre le premier point de fixation (71) et les seconds points de fixation (72).

6. Appareil à coussin d'air (40) selon la revendication 5, dans lequel une section (83) de la surface supérieure du coussin d'air (45) entre le premier point de fixation (71) et les seconds points de fixation (72) est fabriquée en tissu de type non métallique et une section (84) de la surface inférieure du coussin d'air entre le premier point de fixation (71) et les seconds points de fixation (72) est fabriquée en tissu métallique.

7. Appareil à coussin d'air (40) selon la revendication 5, dans lequel le coussin d'air (45) est fabriqué en tissu de type non métallique et une plaque de métal (85) est fixée à une section de la surface inférieure du coussin d'air (45) entre le premier point de fixation (71) et les seconds points de fixation (72).

8. Appareil à coussin d'air (40) selon la revendication 5, dans lequel le coussin d'air (45) est fabriqué en tissu de type non métallique, une portion réceptrice en forme de sac (86) est formée dans une section de la surface inférieure du coussin d'air (45) entre le premier point de fixation (71) et les seconds points de fixation (72), et une plaque de métal (87) est reçue dans la portion réceptrice (86).
